(19) **Europäisches Patentamt / European Patent Office / Office européen des brevets**

(11) **EP 4 734 182 A1**

(12) # EUROPEAN PATENT APPLICATION
published in accordance with Art. 153(4) EPC

(43) Date of publication:
29.04.2026 Bulletin 2026/18

(21) Application number: 24825593.7

(22) Date of filing: 10.05.2024

(51) International Patent Classification (IPC):
$H01M\ 4/525^{(2010.01)}$    $H01B\ 1/06^{(2006.01)}$
$H01M\ 4/36^{(2006.01)}$    $H01M\ 4/62^{(2006.01)}$

(52) Cooperative Patent Classification (CPC):
Y02E 60/10

(86) International application number:
PCT/JP2024/017533

(87) International publication number:
WO 2024/262184 (26.12.2024 Gazette 2024/52)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 21.06.2023 JP 2023101895

(71) Applicants:
• **Panasonic Holdings Corporation**
**Kadoma-shi, Osaka 571-8501 (JP)**
• **TOYOTA JIDOSHA KABUSHIKI KAISHA
Toyota-Shi,
Aichi-Ken 471-8571 (JP)**

(72) Inventors:
• **MIZUNO, Keita**
**Kadoma-shi, Osaka 571-0057 (JP)**
• **UENO, Koki**
**Kadoma-shi, Osaka 571-0057 (JP)**
• **ITO, Yusuke**
**Kadoma-shi, Osaka 571-0057 (JP)**
• **SUGIMOTO, Yuta**
**Kadoma-shi, Osaka 571-0057 (JP)**
• **HASHIMOTO, Kazuya**
**Kadoma-shi, Osaka 571-0057 (JP)**
• **SASAKI, Izuru**
**Kadoma-shi, Osaka 571-0057 (JP)**

(74) Representative: **Eisenführ Speiser
Patentanwälte Rechtsanwälte PartGmbB
Gollierstraße 4
80339 München (DE)**

(54) **ELECTRODE MATERIAL AND BATTERY**

(57) An electrode material 1000 includes a particle group of a coated active material 130. The coated active material 130 includes an active material 110 and a coating layer 111 coating at least a part of a surface of the active material 110 and including a first solid electrolyte. The electrode material 1000 satisfies at least one of the following (i) to (iii).

(i) A thickness Tc of the coating layer calculated by averaging median values in thickness distributions of a plurality of particles of the coating layer is 1.0 nm or more and 100.0 nm or less.

(ii) A thickness Ta of the coating layer calculated by averaging average values in thickness distributions of a plurality of particles of the coating layer is 9.0 nm or more and 100.0 nm or less.

(iii) A thickness Tq of the coating layer calculated by averaging first quartiles in thickness distributions of a plurality of particles of the coating layer is 2.5 nm or more and 50.0 nm or less.

FIG.1

EP 4 734 182 A1

**Description**

TECHNICAL FIELD

The present disclosure relates to an electrode material and a battery.

BACKGROUND ART

Patent Literature 1 discloses a positive electrode material including a positive electrode active material and a first solid electrolyte containing Li, Ti, M1, and F and coating at least a part of the surface of the positive electrode active material. Here, M1 is at least one selected from the group consisting of Ca, Mg, Al, Y, and Zr.

CITATION LIST

Patent Literature

Patent Literature 1: WO 2021/187391

SUMMARY OF INVENTION

Technical Problem

In the conventional art, it is desired to reduce the resistance of a battery.

Solution to Problem

An electrode material of the present disclosure is an electrode material including a particle group of a coated active material, wherein

particles of the coated active material each include an active material and a coating layer coating at least a part of a surface of the active material, and
at least one selected from the group consisting of the following requirements (i), (ii), and (iii) is satisfied,

(i) a thickness Tc of the coating layer calculated by averaging median values in thickness distributions of the coating layers of a plurality of the particles is 1.0 nm or more and 100.0 nm or less,
(ii) a thickness Ta of the coating layer calculated by averaging average values in thickness distributions of the coating layers of a plurality of the particles is 9.0 nm or more and 100.0 nm or less, and
(iii) a thickness Tq of the coating layer calculated by averaging first quartiles in thickness distributions of the coating layers of a plurality of the particles is 2.5 nm or more and 50.0 nm or less.

Advantageous Effects of Invention

According to the present disclosure, the resistance of a battery can be reduced.

BRIEF DESCRIPTION OF THE DRAWINGS

FIG. 1 is a cross-sectional view showing a schematic configuration of an electrode material according to Embodiment 1.
FIG. 2 is a cross-sectional view of a coated active material for illustrating a thickness measurement position of a coating layer.
FIG. 3 is a cross-sectional view showing another schematic configuration of an electrode material according to Embodiment 1.
FIG. 4 is a cross-sectional view showing a schematic configuration of a battery according to Embodiment 2.
FIG. 5 is a graph showing the measurement results of a thickness obtained for one particle of a coated active material according to Example 1.
FIG. 6 is an electron microscope image of a cross-section of the coated active material according to Example 1.

FIG. 7 is an electron microscope image of a cross-section of a coated active material according to Comparative Example 1.

DESCRIPTION OF EMBODIMENTS

(Findings on which the present disclosure is based)

For example, in the case where an active material and a solid electrolyte are in contact with each other, the solid electrolyte may be oxidatively decomposed during charging of a battery. This tendency becomes pronounced when the solid electrolyte has poor oxidation stability like a sulfide solid electrolyte. To solve this problem, the surface of the active material is coated with a coating material having excellent oxidation stability such as a halide solid electrolyte.

Here, the present inventors have discovered that even when the composition of the coating material is the same, a difference occurs in the resistance of a battery. The present inventors have found that this difference is related to the distribution of the thickness of a coating layer and have arrived at the present disclosure.

Embodiments of the present disclosure are described below with reference to the drawings. The present disclosure is not limited to the following embodiments.

In this description, "average value" means an arithmetic mean. In addition, "to average" means "to calculate an arithmetic mean".

(Embodiment 1)

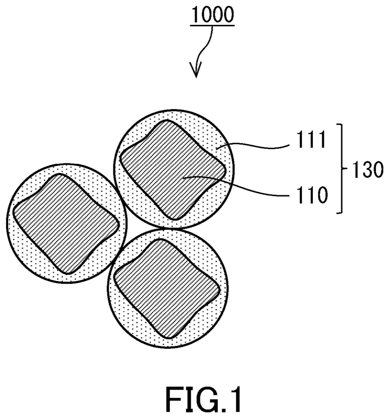

FIG. 1 is a cross-sectional view showing a schematic configuration of an electrode material 1000 according to Embodiment 1. The electrode material 1000 includes a particle group of a coated active material 130. The particles of the coated active material 130 each include an active material 110 and a coating layer 111. The shape of the active material 110 is, for example, a particle shape. The coating layer 111 coats at least a part of the surface of the active material 110.

The coating layer 111 can be a layer including a first solid electrolyte. The coating layer 111 is provided on the surface of the active material 110. When the coating layer 111 includes the first solid electrolyte, the ion conduction resistance of the coated active material 130 can be reduced.

The first solid electrolyte contains, for example, Li, M, and F. M is at least one element selected from the group consisting of metalloid elements and metal elements other than Li.

The "metalloid elements" include B, Si, Ge, As, Sb, and Te.

The "metal elements" include all the elements included in Groups 1 to 12 of the periodic table except hydrogen and all the elements included in Groups 13 to 16 of the periodic table except B, Si, Ge, As, Sb, Te, C, N, P, O, S, and Se. That is, the metal elements are a group of elements that can become a cation when forming an inorganic compound with a halogen element.

The first solid electrolyte can be a solid electrolyte containing fluorine as an element. The solid electrolyte containing fluorine is also referred to as fluoride solid electrolyte. The fluoride solid electrolyte has excellent oxidation resistance due to the high electronegativity of fluorine. Therefore, by coating the surface of the active material 110 with the first solid electrolyte, oxidative decomposition of another solid electrolyte in contact with the active material 110 can be suppressed. Accordingly, the resistance of a battery can be reduced.

In the present disclosure, the resistance of a battery can be measured by the following method. After the battery is produced, the battery is allowed to stand in a thermostatic chamber at 25°C and subjected to charge-discharge processing. Then, the battery is charged to a desired charging voltage and discharged at a desired rate. Then, constant current discharge is performed at a desired current amount for several seconds. A value obtained by dividing the difference between the open circuit voltage before discharge and the voltage at the end of discharge by the amount of discharge current is defined as a resistance value.

The coating layer 111 may uniformly coat the active material 110.

The coating layer 111 may coat only a part of the surface of the active material 110. In this case, the particles of the active material 110 are in direct contact with each other via the portions not coated with the coating layer 111, so that the electronic conductivity between the particles of the active material 110 are improved. As a result, high-power operation of the battery becomes possible.

In the present embodiment, the electrode material 1000 satisfies at least one selected from the group consisting of the following requirements (i), (ii), and (iii).

(i) A thickness Tc of the coating layer calculated by averaging the median values in the thickness distributions of the coating layers of a plurality of the particles is 1.0 nm or more and 100.0 nm or less.
(ii) A thickness Ta of the coating layer calculated by averaging the average values in the thickness distributions of the coating layers of a plurality of the particles is 9.0 nm or more and 100.0 nm or less.

(iii) A thickness Tq of the coating layer calculated by averaging the first quartiles in the thickness distributions of the coating layers of a plurality of the particles is 2.5 nm or more and 50.0 nm or less.

Regarding (i), first, a thickness distribution is obtained for each of a plurality of particles of the coated active material 130. A median value is calculated from this thickness distribution. The average value of the median values respectively calculated for the plurality of particles of the coated active material 130 is defined as Tc. At this time, Tc is 1.0 nm or more and 100.0 nm or less.

Regarding (ii), first, a thickness distribution is obtained for each of a plurality of particles of the coated active material 130. An average value is calculated from this thickness distribution. The average values of the average values respectively calculated for the plurality of particles of the coated active material 130 are defined as Ta. At this time, Ta is 9.0 nm or more and 100.0 nm or less.

Regarding (iii), first, a thickness distribution is obtained for each of a plurality of particles of the coated active material 130. A first quartile is calculated from this thickness distribution. The average value of the first quartiles respectively calculated for the plurality of particles of the coated active material 130 is defined as Tq. At this time, Tq is 2.5 nm or more and 50.0 nm or less.

The thickness of the coating layer 111 can be measured, for example, by the following method.

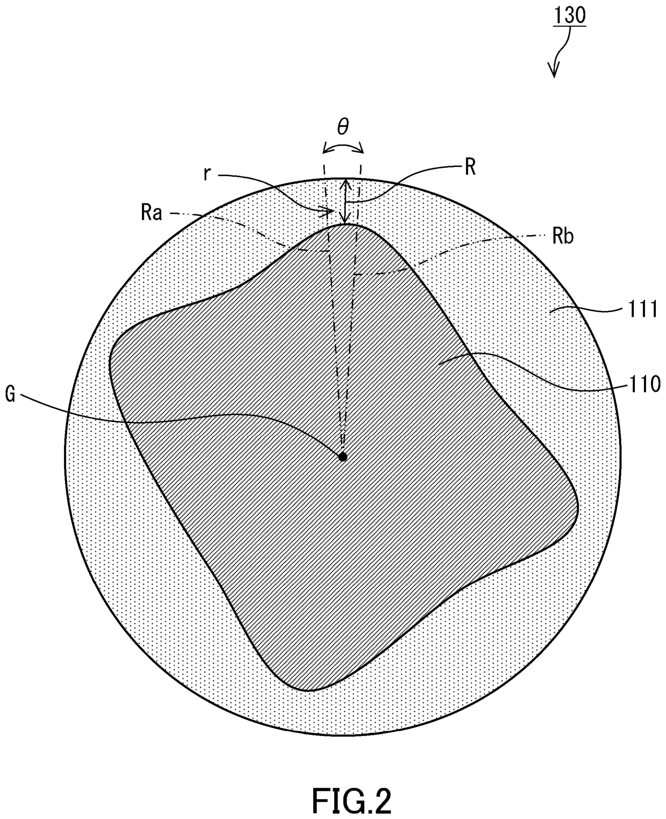

FIG. 2 is a cross-sectional view of the coated active material 130 for illustrating a thickness measurement position of the coating layer 111. First, a cross-section of a particle of the coated active material 130 is photographed using a scanning electron microscope (SEM). In the cross-section SEM image of the coated active material 130, a center of gravity G of the active material 110 is determined. Next, line segments Ra and Rb passing through the center of gravity G and extending in the radial direction of the coated active material 130 are defined. A central angle θ formed by the line segments Ra and Rb is 1°. Then, a region r of the coated active material 130 demarcated by the line segments Ra and Rb is defined. In the region r, a thickness R of the coating layer 111 is measured.

The above measurement is repeated in the circumferential direction of the coated active material 130 to measure the thickness R for each region r. As a result, 360 thickness values can be obtained for one particle of the coated active material 130.

Next, a median value, an average value, and a first quartile are calculated from the 360 thickness values of the coating layer 111, that is, the thickness distribution, obtained from one particle of the coated active material 130.

Next, for each of arbitrary multiple particles of the coated active material 130, a median value, an average value, and a first quartile are calculated by the above-described method.

Tc is calculated by averaging the median values respectively obtained for the multiple particles of the coated active material 130. Ta is calculated by averaging the average values respectively obtained for the multiple particles of the coated active material 130. Tq is calculated by averaging the first quartiles respectively obtained for the multiple particles of the coated active material 130.

Here, the number of "arbitrary multiple coated active material particles" is at least four or more. The number of "arbitrary multiple coated active material particles" may be 10 or more or may be 50 or more. The number of "arbitrary multiple coated active material particles" may be 1000 or less or may be 100 or less.

The electrode material 1000 includes the coated active material 130, and the coated active material 130 includes the active material 110 and the coating layer 111. Since the coated active material 130 has the coating layer 111, the active material 110 and another material are less likely to be in direct contact with each other. Accordingly, the other material can be inhibited from being oxidatively decomposed. An example of the other material is a second solid electrolyte described later. In the present embodiment, the electrode material 1000 satisfies at least one selected from the group consisting of the above-described requirements (i), (ii), and (iii). In this case, since the thickness distribution of the coating layer 111 is appropriately adjusted, direct contact between the active material 110 and the other material can be suppressed. In addition, since the thickness distribution of the coating layer 111 is appropriately adjusted, the coating layer 111 is less likely to become a cause of resistance, so that the resistance of the battery can be reduced.

If Tc exceeds 100 nm, Ta exceeds 100 nm, or Tq exceeds 50 nm, the resistance of the battery may become significantly high, so that such a thickness is not preferable. This is mainly due to the following two reasons. First, generally, when a coating layer having a low electronic conductivity thickly coats the surface of an active material, it becomes difficult to supply electrons necessary for the electrode reaction to the active material, so that the resistance of the battery can become high. In addition, when the ionic conductivity of the first solid electrolyte included in the coating layer is not high, it becomes difficult to supply ions necessary for the electrode reaction to the active material, so that the resistance of the battery can become high.

Tc may be 30.0 nm or less or may be 27.3 nm or less. With such a configuration, the resistance of the battery can be further reduced even when the ionic conductivity of the first solid electrolyte is low.

Tc may be 10.0 nm or more or may be 11.7 nm or more. In this case, since the thickness of the coating layer 111 is sufficiently large, oxidative decomposition of the other material can be sufficiently suppressed. As a result, the resistance of the battery can be further reduced.

Tc may be 11.8 nm or more and 20.0 nm or less or may be 11.8 nm or more and 14.9 nm or less. In this case, since the thickness distribution of the coating layer 111 is appropriately adjusted, the resistance of the battery can be further reduced.

Ta may be 40.0 nm or less or may be 38.8 nm or less. With such a configuration, the resistance of the battery can be further reduced even when the ionic conductivity of the first solid electrolyte is low.

Ta may be 20.0 nm or more or may be 21.1 nm or more. In this case, since the thickness of the coating layer 111 is sufficiently large, oxidative decomposition of the other material can be sufficiently suppressed. As a result, the resistance of the battery can be further reduced.

A coefficient of variation CV of the thickness of the coating layer 111 may be 70% or more and less than 237%. With such a configuration, the variation in thickness of the coating layer 111 can be reduced.

The coefficient of variation CV means a value obtained by dividing a standard deviation by an average value. Specifically, first, a thickness distribution is obtained for each of a plurality of particles of the coated active material 130. An average value Xa is calculated from this thickness distribution. In addition, a standard deviation $\sigma a$ is calculated from this thickness distribution. A coefficient of variation CVa is calculated from the average value Xa and the standard deviation $\sigma a$ by CVa = $\sigma a$/Xa.

The coefficient of variation CV is a value, expressed as a percentage, which is obtained by averaging the coefficients of variation CVa respectively obtained for the plurality of particles of the coated active material 130.

The coefficient of variation CV may be 80% or more. The coefficient of variation CV may be 230% or less, 210% or less, 199% or less, or 150% or less. With such a configuration, the variation in thickness of the coating layer 111 can be further reduced.

Tq may be 10.0 nm or less or may be 9.1 nm or less. With such a configuration, the resistance of the battery can be further reduced even when the ionic conductivity of the first solid electrolyte is low.

<<Active Material 110>>

The active material 110 includes a material having the property of occluding and releasing metal ions (for example, lithium ions). The active material 110 is a positive electrode active material or a negative electrode active material. In the case where the active material 110 is a positive electrode active material, the electrode material 1000 is a positive electrode material. In the case where the active material 110 is a negative electrode active material, the electrode material 1000 is a negative electrode material.

In the case where the active material 110 is a positive electrode active material, a lithium-containing transition metal oxide, a transition metal fluoride, a polyanion material, a fluorinated polyanion material, a transition metal sulfide, a transition metal oxysulfide, a transition metal oxynitride, etc., can be used as the active material 110. In particular, in the case where a lithium-containing transition metal oxide is used as the active material 110, the production cost of the battery can be reduced and the average discharge voltage of the battery can be increased. Examples of the lithium-containing transition metal oxide include lithium nickel cobalt aluminum oxide (Li(NiCoAl)O$_2$), lithium nickel cobalt manganese oxide (Li(NiCoMn)O$_2$), and lithium cobalt oxide (LiCoO$_2$).

In the case where the active material 110 is a negative electrode active material, materials described below can be used as the active material 110.

The active material 110 has, for example, a particle shape. The particle shape of the active material 110 is not particularly limited. The particle shape of the active material 110 can be a spherical shape, an ellipsoid shape, a flake shape, or a fiber shape.

The median diameter of the active material 110 may be 0.1 $\mu$m or more and 100 $\mu$m or less. When the median diameter of the active material 110 is 0.1 $\mu$m or more, the coated active material 130 and another solid electrolyte can form a good state of dispersion. As a result, the charge-discharge characteristics of the battery are improved. When the median diameter of the active material 110 is 100 $\mu$m or less, the diffusion rate of lithium inside the active material 110 is sufficiently ensured. Therefore, the battery can operate at a high power.

In this description, the "median diameter" means a particle diameter at which the cumulative volume in a volume-based particle size distribution is equal to 50%. The volume-based particle size distribution is measured with, for example, a laser diffraction particle size measurement device or an image analyzer.

<<Coating Layer 111>>

The coating layer 111 can include a first solid electrolyte. The first solid electrolyte has ionic conductivity. The ionic conductivity is typically lithium-ion conductivity. The coating layer 111 may include the first solid electrolyte as a main component or may include only the first solid electrolyte. Here, the "main component" means a component included in the largest amount in mass ratio. The "including only the first solid electrolyte" means that, except for inevitable impurities, no materials other than the first solid electrolyte are intentionally added. For example, the raw materials of the first solid electrolyte, by-products produced during the production of the first solid electrolyte, etc., are included in the inevitable impurities. The ratio of the mass of the inevitable impurities to the mass of the entirety of the coating layer 111 may be 5% or less, 3% or less, 1% or less, or 0.5% or less.

The first solid electrolyte may be a material containing Li, M, and F. M is at least one selected from the group consisting of metalloid elements and metal elements other than Li. Such a material has excellent oxidation resistance. Therefore, the coated active material 130 having the coating layer 111 of the first solid electrolyte can improve the charge-discharge efficiency and the thermal stability of the battery.

The first solid electrolyte may contain Li, M1, M2, and F. Here, M1 is at least one selected from the group consisting of Ti and Zr, and M2 is at least one selected from the group consisting of Al, Y, Mg, and Ca. In the case where the first solid electrolyte has such a composition, the first solid electrolyte exhibits a high ionic conductivity. Here, a high lithium-ion conductivity is, for example, $1.0 \times 10^{-8}$ S/cm or more. That is, the first solid electrolyte can have, for example, a lithium-ion conductivity of $1.0 \times 10^{-8}$ S/cm or more. In the case where M1 is at least one selected from the group consisting of Ti and Zr and M2 is at least one selected from the group consisting of Al, Y, Mg, and Ca, the first solid electrolyte can form a cationic framework structure suitable for lithium ion conduction, within a crystal lattice. Therefore, the first solid electrolyte exhibits a high lithium-ion conductivity.

In order to further increase the ionic conductivity of the first solid electrolyte, M2 may be Al.

In order to further increase the ionic conductivity of the first solid electrolyte, M1 may be Ti.

In order to further increase the ionic conductivity of the first solid electrolyte, M2 may be Al, and M1 may be Ti.

The first solid electrolyte may be substantially composed of Li, Ti, Al, and F. Here, "the first solid electrolyte is substantially composed of Li, Ti, Al, and F" means that the total molar ratio (i.e., molar fraction) of the amounts of substance of Li, Ti, Al, and F to the sum of the amounts of substance of all elements constituting the first solid electrolyte is 90% or more. As an example, the molar ratio (i.e., molar fraction) may be 95% or more. The first solid electrolyte may be composed of only Li, Ti, Al, and F.

The composition of the first solid electrolyte may be represented by the following composition formula (1).

$$Li_{6-(4-x-4y+my)b}(Ti_{1-x-y}Al_xM3_y)_bF_{6-2z}O_z \ldots \qquad (1)$$

In the composition formula (1), M3 is at least one selected from the group consisting of Zr, Ni, Fe, and Cr, m is the valence of M3, and $0.1 < x < 0.9$, $0 \leq y < 0.1$, $0 \leq z < 0.1$, and $0.8 < b \leq 1.2$ are satisfied. The first solid electrolyte having such a composition has a higher ionic conductivity and can be produced by a method with high industrial productivity.

In the composition formula (1), $0.1 < x < 0.9$, $y = 0$, $z = 0$, and $0.8 < b \leq 1.2$ may be satisfied. In this case, the first solid electrolyte has a higher ionic conductivity.

In the composition formula (1), $0.1 \leq x \leq 0.7$ may be satisfied.

The upper limit value and the lower limit value of the range of x in the composition formula (1) can be defined by any combination selected from numerical values of 0.1, 0.3, 0.4, 0.5, 0.6, 0.65, 0.67, 0.7, 0.8, and 0.9.

The upper limit value and the lower limit value of the range of b in the composition formula (1) can be defined by any combination selected from numerical values of 0.8, 0.9, 0.94, 1.0, 1.06, 1.1, and 1.2.

The first solid electrolyte may be crystalline or amorphous.

The shape of the first solid electrolyte is not limited. The shape of the first solid electrolyte is, for example, a needle shape, a spherical shape, or an ellipsoid shape. The shape of the first solid electrolyte may be a particle shape.

In the case where the shape of the first solid electrolyte is, for example, a particle shape (for example, spherical shape), the first solid electrolyte may have a median diameter of 0.01 μm or more and 100 μm or less.

<<Method for Producing First Solid Electrolyte>>

The first solid electrolyte according to Embodiment 1 can be produced, for example, by the following method.

Two or more types of raw material powders are mixed so as to have a target composition.

As an example, it is assumed that the target composition is $Li_{2.7}Ti_{0.3}Al_{0.7}F_6$. In this case, raw material powders of LiF, $TiF_4$, and $AlF_3$ are mixed generally in a molar ratio of $LiF:TiF_4:AlF_3 = 2.7:0.3:0.7$. The raw material powders may be mixed in a pre-adjusted molar ratio so as to compensate for compositional changes that may occur during a synthesis process.

The raw material powders are reacted with each other mechanochemically in a mixing device such as a planetary ball mill to obtain a reaction product. That is, the raw material powders are mixed and reacted using a mechanochemical milling method. The reaction product thus obtained may be further fired in an inert gas atmosphere or in a vacuum.

Alternatively, a mixture of the raw material powders may be fired and reacted with each other in an inert gas atmosphere to obtain a reaction product. An example of the inert gas is helium, nitrogen, or argon. The firing may be performed in a vacuum. In the firing step, the mixture of the raw material powders may be placed in a container (for example, a crucible, a sealed container, or a vacuum sealed tube) and fired in a heating furnace.

The first solid electrolyte according to Embodiment 1 is obtained by these methods.

The composition of the solid electrolyte can be determined, for example, by high-frequency inductively-coupled plasma emission spectroscopy or ion chromatography.

<<Method for Producing Coated Active Material>>

When the active material 110 is to be coated with the first solid electrolyte, the coated active material can be produced, for example, by the following method.

A powder of the active material 110 and a powder of the first solid electrolyte are prepared in a predetermined mass ratio. For example, a powder of $Li(Ni, Co, Al)O_2$ is prepared as the active material 110, and a powder of $Li_{2.7}Al_{0.7}Ti_{0.3}F_6$ is prepared as the first solid electrolyte. These two types of materials are charged into the same reaction container, and a shear force is applied to the two types of materials using a rotating blade. Alternatively, the two types of materials may be caused to collide with each other by a jet stream. By applying mechanical energy, at least a part of the surface of the active material 110 can be coated with the first solid electrolyte, thereby obtaining a coated active material.

Before applying mechanical energy to the mixture of the powder of the active material 110 and the powder of the first solid electrolyte, the mixture may be subjected to a milling process. A mixing device such as a ball mill can be used for the milling process. In order to suppress a side reaction of the materials, the milling process may be performed in a dry or inert atmosphere.

The coated active material may be produced by a dry particle composite formation method. The processing by the dry particle composite formation method includes applying at least one mechanical energy selected from the group consisting of impact, compression, and shear to the active material 110 and the first solid electrolyte. The active material 110 and the first solid electrolyte are mixed in an appropriate ratio.

A device used to produce the coated active material is not limited and can be a device capable of applying mechanical energy such as impact, compression, and shear to the mixture of the active material 110 and the first solid electrolyte. Examples of the device capable of applying mechanical energy include ball mills, jet mills, compression shear processing devices (particle composite formation devices) such as "MECHANO FUSION" (manufactured by HOSOKAWA MICRON CORPORATION) and "NOBILTA" (manufactured by HOSOKAWA MICRON CORPORATION), high-speed mixing and granulating machines such as "BALANCE GRAN" (manufactured by FREUND-TURBO CORPORATION), and "Hybridization System (high-speed airflow impact device)" (manufactured by NARA MACHINERY CO., LTD.).

"MECHANO FUSION" is a particle composite formation device using dry mechanical composite formation technology by applying strong mechanical energy to a plurality of different material particles. In MECHANO FUSION, mechanical energy of compression, shear, friction, etc., is applied to the powdery raw materials charged between a rotating container and a press head, whereby composite formation of the particles occurs.

"NOBILTA" is a particle composite formation device using dry mechanical composite formation technology, which is an advancement of particle composite formation technology, in order to perform composite formation with nanoparticles as raw materials. NOBILTA produces composite particles by applying mechanical energy of impact, compression, and shear to a plurality of raw material powders.

In "NOBILTA", processing in which a rotor placed inside a horizontal cylindrical mixing container so as to have a predetermined gap between the rotor and the inner wall of the mixing container rotates at a high speed and the raw material powders are forced to pass through the gap, is repeated multiple times. Accordingly, impact, compression, and shear forces can be applied to the mixture to produce composite particles of the active material 110 and the first solid electrolyte. The conditions such as the rotation speed of the rotor, the processing time, and the charged amounts can be adjusted as appropriate.

"BALANCE GRAN" has a chopper that agitates powders in a spiral from the outer circumference to the inner circumference to promote convection, and includes an agitator scraper that rotates in a direction opposite to that of the chopper. By these actions, the mixture can be uniformly dispersed to produce composite particles.

In "Hybridization System", a force consisting mainly of impact is applied while dispersing the raw material powders in a high-speed airflow. Accordingly, composite particles of the active material 110 and the first solid electrolyte are produced.

However, the processing by the above-described devices is not essential. The coated active material 130 may be produced by mixing the active material 110 and the first solid electrolyte using a mortar, a mixer, or the like. The first solid electrolyte may be deposited on the surface of the active material 110 by various methods such as a spray method, a spray dry coating method, an electrodeposition method, a dipping method, and a mechanical mixing method using a dispersing machine.

Tc, Ta, and Tq can be adjusted to desired ranges by appropriately adjusting the mixing ratio of the active material 110 and the first solid electrolyte when producing the coated active material 130. In addition, Tc, Ta, and Tq can be adjusted to desired ranges by appropriately adjusting the mechanical energy such as impact, compression, and shear.

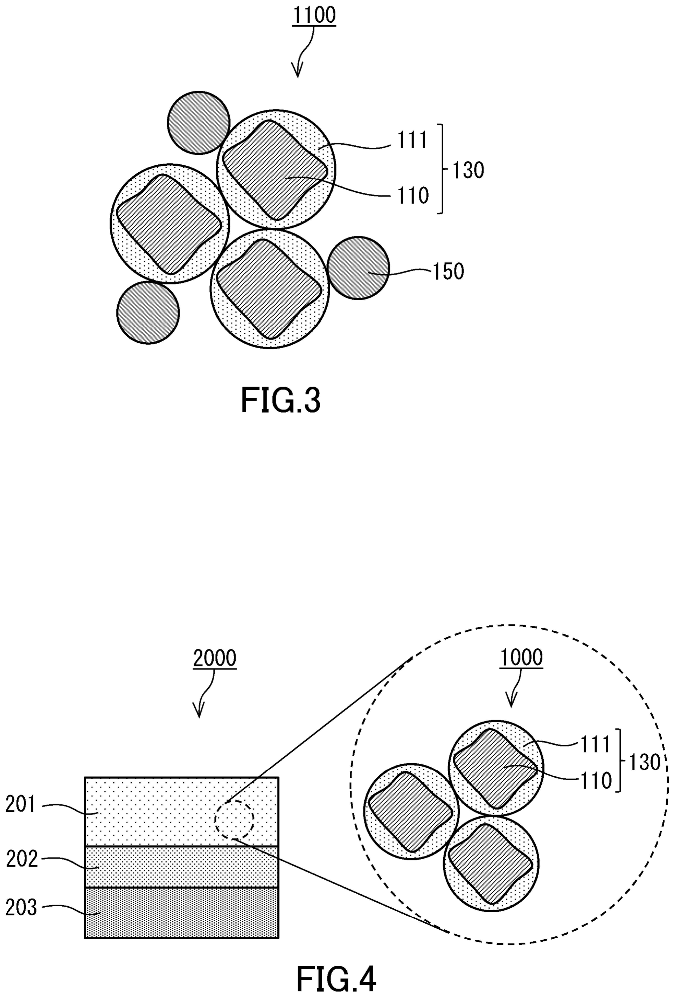

FIG. 3 is a cross-sectional view showing another schematic configuration of an electrode material 1100 according to Embodiment 1. The electrode material 1100 includes a particle group of a coated active material 130 and a second solid electrolyte 150. The electrode material 1100 of the present embodiment is suitable for reducing the resistance of a battery.

An active material 110 included in the coated active material 130 is separated from the second solid electrolyte 150 by a coating layer 111. The active material 110 may not necessarily be in direct contact with the second solid electrolyte 150. This is because the coating layer 111 has ionic conductivity.

The second solid electrolyte 150 may be a solid electrolyte having a composition different from that of a first solid electrolyte. That is, the first solid electrolyte and the second solid electrolyte 150 may be made of different materials. With such a configuration, the electrode material 1100 includes the coated active material 130, so that the configuration is suitable for suppressing an increase in the resistance of the battery.

<<Second Solid Electrolyte>>

The second solid electrolyte 150 may include at least one selected from the group consisting of a halide solid electrolyte, a sulfide solid electrolyte, an oxide solid electrolyte, a polymer solid electrolyte, and a complex hydride solid electrolyte.

When the second solid electrolyte 150 is a halide solid electrolyte, for example, $Li_3REX_6$, $Li_3(Al, Ga, In)X_6$, $Li_2MgX_4$, $Li_2FeX_4$, $Li(Al, Ga, In)X_4$, LiI, etc., can be used as the halide solid electrolyte. Here, X is at least one selected from the group consisting of Cl, Br, and I, and RE is at least one selected from the group consisting of rare earth elements.

When the second solid electrolyte 150 is an oxide solid electrolyte, for example, NASICON solid electrolytes such as $LiTi_2(PO_4)_3$ and an element-substituted substance thereof, $(LaLi)TiO_3$-based perovskite solid electrolytes, LISICON solid electrolytes such as $Li_{14}ZnGe_4O_{16}$, $Li_4SiO_4$, $LiGeO_4$, and element-substituted substances thereof, garnet solid electrolytes such as $Li_7La_3Zr_2O_{12}$ and an element-substituted substance thereof, $Li_3N$ and an H-substituted substance thereof, $Li_3PO_4$ and an N-substituted substance thereof, glass or glass ceramics in which a Li-B-O compound such as $LiBO_2$ and $Li_3BO_3$, etc., is used as base material and a material such as $Li_2SO_4$ or $Li_2CO_3$ is added can be used as the oxide solid electrolyte.

When the second solid electrolyte 150 is a polymer solid electrolyte, for example, a compound of a polymer compound and a lithium salt can be used as the polymer solid electrolyte. The polymer compound may have an ethylene oxide structure. By having an ethylene oxide structure, the polymer compound can contain a large amount of the lithium salt. Therefore, the ionic conductivity can be further increased. As the lithium salt, $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, etc., can be used. As the lithium salt, one lithium salt selected from these may be used alone, or a mixture of two or more lithium salts selected from these may be used.

When the second solid electrolyte 150 is a complex hydride solid electrolyte, for example, $LiBH_4$-LiI, $LiBH_4$-$P_2S_5$, etc., can be used as the complex hydride solid electrolyte.

The second solid electrolyte 150 may contain Li and S. In other words, the second solid electrolyte 150 may include a sulfide solid electrolyte. The sulfide solid electrolyte has a high ionic conductivity and can improve the charge-discharge efficiency of the battery. On the other hand, the sulfide solid electrolyte may have poor oxidation resistance. In the case where a sulfide solid electrolyte is included as the second solid electrolyte 150 in a battery, high effects are obtained by applying the technique of the present disclosure.

When the second solid electrolyte 150 is a sulfide solid electrolyte, $Li_2S$-$P_2S_5$, $Li_2S$-$SiS_2$, $Li_2S$-$B_2S_3$, $Li_2S$-$GeS_2$, $Li_{3.25}Ge_{0.25}P_{0.75}S_4$, $Li_{10}GeP_2S_{12}$, etc., can be used as the sulfide solid electrolyte. LiX, $Li_2O$, $MO_q$, $Li_pMO_q$, etc., may be added to these. The element X in "LiX" is at least one element selected from the group consisting of F, Cl, Br, and I. In "$MO_q$" and "$Li_pMO_q$", the element M is at least one element selected from the group consisting of P, Si, Ge, B, Al, Ga, In, Fe, and Zn. In "$MO_q$" and "$Li_pMO_q$", p and q are each an independent natural number.

The second solid electrolyte 150 may include two or more materials selected from the materials listed as the solid electrolyte. The second solid electrolyte 150 may include, for example, a halide solid electrolyte and a sulfide solid electrolyte.

The second solid electrolyte 150 may include inevitable impurities such as starting materials used in synthesizing the solid electrolyte, by-products, and decomposition products.

The shape of the second solid electrolyte is not particularly limited and may be a needle shape, a spherical shape, an ellipsoid shape, or the like. The shape of the second solid electrolyte 150 may be a particle shape.

In the case where the shape of the second solid electrolyte 150 is, for example, a particle shape (for example, a spherical shape), this solid electrolyte may have a median diameter of 0.1 $\mu$m or more and 100 $\mu$m or less. In the case of having a median diameter in this range, the state of dispersion of the coated active material 130 and the second solid electrolyte 150 becomes good in the electrode material 1100.

In the present embodiment, the median diameter of the second solid electrolyte 150 may be 10 $\mu$m or less. In this case, in the electrode material 1100, the state of dispersion of the coated active material 130 and the second solid electrolyte 150 becomes better.

In the present embodiment, the median diameter of the second solid electrolyte 150 may be smaller than the median diameter of the coated active material 130. In this case, in the electrode material 1100, the state of dispersion of the coated active material 130 and the second solid electrolyte 150 becomes better.

In the electrode material 1100, the second solid electrolyte 150 and the coated active material 130 may be in contact with each other. At this time, the coating layer 111 and the second solid electrolyte 150 are in contact with each other.

The electrode material 1100 may include a plurality of particles of the second solid electrolyte 150 and a plurality of particles of the coated active material 130. That is, the electrode material 1100 can be a mixed powder of a powder of the coated active material 130 and a powder of the second solid electrolyte 150.

In the electrode material 1100, the content of the second solid electrolyte 150 and the content of the coated active material 130 may be the same as or different from each other.

<<Other Materials>>

The electrode material 1000 or the electrode material 1100 may contain a binder for the purpose of improving adhesion between particles. The binder is used to improve the binding properties of the materials constituting an electrode. Examples of the binder include polyvinylidene fluoride, polytetrafluoroethylene, polyethylene, polypropylene, aramid resin, polyamide, polyimide, polyamide-imide, polyacrylonitrile, polyacrylic acid, poly(methyl acrylate), poly(ethyl acrylate), poly(hexyl acrylate), polymethacrylic acid, poly(methyl methacrylate), poly(ethyl methacrylate), poly(hexyl methacrylate), polyvinyl acetate, polyvinylpyrrolidone, polyether, polycarbonate, polyether sulfone, polyether ketone, polyether ether ketone, polyphenylene sulfide, poly(hexafluoropropylene), styrene-butadiene rubber, carboxymethyl cellulose, and ethyl cellulose. In addition, a copolymer of two or more monomers selected from the group consisting of tetrafluoroethylene, hexafluoroethylene, hexafluoropropylene, perfluoroalkyl vinyl ether, vinylidene fluoride, chlorotrifluoroethylene, ethylene, propylene, butadiene, styrene, pentafluoropropylene, fluoromethyl vinyl ether, acrylate, acrylic acid, and hexadiene, can also be used. One selected from these may be used alone, or two or more selected from these may be used in combination.

The binder may be an elastomer for the reason of having excellent binding properties. Elastomers are polymers that have rubber elasticity. The elastomer used as the binder may be a thermoplastic elastomer or a thermosetting elastomer. The binder may include a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubber (BR), isoprene rubber (IR), chloroprene rubber (CR), acrylonitrile-butadiene rubber (NBR), styrene-butylene rubber (SBR), styrene-butadiene-styrene (SBS), styrene-isoprene-styrene (SIS), hydrogenated isoprene rubber (HIR), hydrogenated butyl rubber (HIIR), hydrogenated nitrile rubber (HNBR), hydrogenated styrene-butylene rubber (HSBR), polyvinylidene fluoride (PVdF), and polytetrafluoroethylene (PTFE). One selected from these may be used alone, or two or more selected from these may be used in combination.

The electrode material 1000 or the electrode material 1100 may include a conductive additive for enhancing electronic conductivity. As the conductive additive, for example, graphites such as natural graphite or artificial graphite, carbon blacks such as acetylene black and Ketjen black, conductive fibers such as carbon fiber or metal fiber, metal powders such as carbon fluoride and aluminum, conductive whiskers such as zinc oxide or potassium titanate, conductive metal oxides such as titanium oxide, conductive polymer compounds such as polyaniline, polypyrrole, and polythiophene, etc., can be used. When a carbon conductive additive is used, cost reduction can be achieved.

The above conductive additive may be included in the coating layer 111.

<<Method for Producing Electrode Material>>

The electrode material 1100 is obtained by mixing the particle group of the coated active material 130 and the second solid electrolyte 150. A method for mixing the particle group of the coated active material 130 and the second solid electrolyte 150 is not limited. The particle group of the coated active material 130 and the second solid electrolyte 150 may be mixed using a tool such as a mortar, or the particle group of the coated active material 130 and the second solid electrolyte 150 may be mixed using a mixing device such as a ball mill.

(Embodiment 2)

Embodiment 2 is described below. The description that overlaps with that of Embodiment 1 is omitted as appropriate.

A battery according to Embodiment 2 includes a first electrode, a separator portion, and a second electrode. The separator portion is located between the first electrode and the second electrode. The first electrode includes the electrode material 1000 according to Embodiment 1. The first electrode may include the electrode material 1100. According to this configuration, since an increase in the resistance of the battery is suppressed, the durability of the battery is improved.

The first electrode is an electrode having a polarity opposite to that of the second electrode. In the case where the first electrode is a positive electrode, the second electrode is a negative electrode. In the case where the first electrode is a negative electrode, the second electrode is a positive electrode.

The separator portion may be an electrolyte layer including a solid electrolyte or may be a separator impregnated with an electrolytic solution.

FIG. 4 is a cross-sectional view showing a schematic configuration of a battery 2000 according to Embodiment 2. The battery 2000 includes a positive electrode 201, an electrolyte layer 202, and a negative electrode 203. The electrolyte layer 202 is placed between the positive electrode 201 and the negative electrode 203. In the battery 2000, the separator portion is the electrolyte layer 32. The positive electrode 201 includes the electrode material 1000 described in Embodiment 1. The positive electrode 201 may include the electrode material 1100. According to this configuration, an increase in the resistance of the battery 2000 is suppressed, so that a battery having excellent durability can be provided. The negative electrode 203 may include the electrode material 1000 or 1100.

The thickness of each of the positive electrode 201 and the negative electrode 203 may be 10 $\mu$m or more and 500 $\mu$m or less. When the thicknesses of the positive electrode 201 and the negative electrode 203 are each 10 $\mu$m or more, a sufficient energy density of the battery can be ensured. When the thicknesses of the positive electrode 201 and the negative electrode 203 are each 500 $\mu$m or less, operation of the battery 2000 at a high power can be achieved.

The electrolyte layer 202 is a layer including an electrolyte material. The electrolyte layer 202 may include at least one solid electrolyte selected from the group consisting of a sulfide solid electrolyte, an oxide solid electrolyte, a halide solid electrolyte, a polymer solid electrolyte, and a complex hydride solid electrolyte. The details of each solid electrolyte are as described in Embodiment 1.

The thickness of the electrolyte layer 202 may be 1 $\mu$m or more and 300 $\mu$m or less. When the thickness of the electrolyte layer 202 is 1 $\mu$m or more, the positive electrode 201 and the negative electrode 203 can be separated more reliably. When the thickness of the electrolyte layer 202 is 300 $\mu$m or less, operation of the battery 2000 at a high power can be achieved.

The negative electrode 203 contains, as a negative electrode active material, a material having the property of occluding and releasing metal ions (for example, lithium ions).

As the negative electrode active material, a metal material, a carbon material, an oxide, a nitride, a tin compound, a silicon compound, etc., can be used. The metal material may be a single metal. Alternatively, the metal material may be an alloy. Examples of the metal material include lithium metal and lithium alloys. Examples of the carbon material include natural graphite, coke, partially graphitized carbon, carbon fiber, spherical carbon, artificial graphite, and amorphous carbon. From the viewpoint of capacity density, silicon (Si), tin (Sn), silicon compounds, tin compounds, etc., can be suitably used.

The median diameter of particles of the negative electrode active material may be 0.1 $\mu$m or more and 100 $\mu$m or less.

The negative electrode 203 may include other materials such as a solid electrolyte. As the solid electrolyte, the materials described in Embodiment 1 can be used.

The battery 2000 can be configured as any of batteries having various shapes such as a coin type, a cylindrical type, a prismatic type, a sheet type, a button type, a flat type, and a stack type.

(Additional notes)

The following techniques are disclosed by the above description.

(Technique 1)

An electrode material including a particle group of a coated active material, wherein

particles of the coated active material each include an active material and a coating layer coating at least a part of a surface of the active material, and

at least one selected from the group consisting of the following requirements (i), (ii), and (iii) is satisfied,

(i) a thickness Tc of the coating layer calculated by averaging median values in thickness distributions of the coating layers of a plurality of the particles is 1.0 nm or more and 100.0 nm or less,

(ii) a thickness Ta of the coating layer calculated by averaging average values in thickness distributions of the coating layers of a plurality of the particles is 9.0 nm or more and 100.0 nm or less, and

(iii) a thickness Tq of the coating layer calculated by averaging first quartiles in thickness distributions of the coating layers of a plurality of the particles is 2.5 nm or more and 50.0 nm or less.

With the electrode material of Technique 1, the resistance of a battery can be reduced.

(Technique 2)

The electrode material according to Technique 1, wherein
the Tc is 30.0 nm or less.
According to this configuration, the resistance of the battery can be further reduced even when the ionic conductivity of the first solid electrolyte is low.

(Technique 3)

The electrode material according to Technique 1 or 2, wherein
the Tc is 10.0 nm or more.
According to this configuration, since the thickness of the coating layer is sufficiently large, oxidative decomposition of another material can be sufficiently suppressed. As a result, the resistance of the battery can be further reduced.

(Technique 4)

The electrode material according to any one of Techniques 1 to 3, wherein
the Tc is 11.8 nm or more and 20.0 nm or less.
According to this configuration, since the distribution of the thickness of the coating layer is appropriately adjusted, the resistance of the battery can be further reduced.

(Technique 5)

The electrode material according to any one of Techniques 1 to 4, wherein
the Ta is 40.0 nm or less.
According to this configuration, the resistance of the battery can be further reduced even when the ionic conductivity of the first solid electrolyte is low.

(Technique 6)

The electrode material according to any one of Techniques 1 to 5, wherein
the Ta is 20.0 nm or more.
According to this configuration, since the thickness of the coating layer is sufficiently large, oxidative decomposition of the other material can be sufficiently suppressed. As a result, the resistance of the battery can be further reduced.

(Technique 7)

The electrode material according to any one of Techniques 1 to 6, wherein
the Tq is 10.0 nm or less.
With such a configuration, the resistance of the battery can be further reduced even when the ionic conductivity of the first solid electrolyte is low.

(Technique 8)

The electrode material according to any one of Techniques 1 to 7, wherein
a coefficient of variation of a thickness of the coating layer is 70% or more and less than 237%.
According to this configuration, the variation in thickness of the coating layer can be reduced.

(Technique 9)

The electrode material according to any one of Techniques 1 to 8, wherein
the coating layer includes a first solid electrolyte.

(Technique 10)

The electrode material according to Technique 9, wherein

the first solid electrolyte contains Li, M, and F, and
the M is at least one element selected from the group consisting of metalloid elements and metal elements other than Li.

(Technique 11)

The electrode material according to Technique 9 or 10, wherein

the first solid electrolyte contains Li, M1, M2, and F,
the M1 is at least one selected from the group consisting of Ti and Zr, and
the M2 is at least one selected from the group consisting of Al, Y, Mg, and Ca. According to this configuration, the first solid electrolyte exhibits a high lithium-ion conductivity.

(Technique 12)

The electrode material according to Technique 11, wherein
the M2 is Al.
According to this configuration, the first solid electrolyte exhibits a higher lithium-ion conductivity.

(Technique 13)

The electrode material according to Technique 11 or 12, wherein
the M1 is Ti.
According to this configuration, the first solid electrolyte exhibits a higher lithium-ion conductivity.

(Technique 14)

The electrode material according to any one of Techniques 9 to 13, wherein

the first solid electrolyte is represented by the following composition formula (1),
where M3 is at least one selected from the group consisting of Zr, Ni, Fe, and Cr, m is a valence of the M3, and

$$0.1 < x < 0.9,$$

$$0 \leq y < 0.1,$$

$$0 \leq z < 0.1,$$

and

$$0.8 < b \leq 1.2$$

are satisfied.
According to this configuration, the first solid electrolyte has a higher ionic conductivity and can be produced by a method with high industrial productivity.

$$Li_{6-(4-x-4y+my)b}(Ti_{1-x-y}Al_xM3_y)_bF_{6-2z}O_z \ldots \qquad (1)$$

(Technique 15)

The electrode material according to Technique 14, wherein

0.1 < x < 0.9, y = 0, z = 0, and 0.8 < b ≤ 1.2 are satisfied.

According to this configuration, the first solid electrolyte exhibits a higher lithium-ion conductivity.

(Technique 16)

The electrode material according to any one of Techniques 9 to 15, further including a second solid electrolyte which is a material different from the first solid electrolyte.

According to this configuration, since the electrode material includes the coated active material, the electrode material is suitable for suppressing an increase in the resistance of the battery.

(Technique 17)

The electrode material according to Technique 16, wherein

the second solid electrolyte contains Li and S.

According to this configuration, since the sulfide solid electrolyte has a high ionic conductivity, the charge-discharge efficiency of the battery can be improved.

(Technique 18)

The electrode material according to any one of Techniques 1 to 17, wherein

the active material is a positive electrode active material, and
the electrode material is a positive electrode material.

(Technique 19)

A battery including an electrode including the electrode material according to any one of Techniques 1 to 18.

According to the battery of Technique 19, since an increase in the resistance of the battery is suppressed, the durability of the battery is improved.

(Technique 20)

A battery including:

a first electrode including the electrode material according to any one of Techniques 1 to 18;
a second electrode; and
an electrolyte layer placed between the first electrode and the second electrode.

According to the battery of Technique 20, since an increase in the resistance of the battery is suppressed, the durability of the battery is improved.

Examples

The present disclosure is described in detail below using examples and comparative examples. The present disclosure is not limited to the following examples.

<Example 1>

[Preparation of First Solid Electrolyte]

In an argon glove box with a dew point of -60°C or lower, raw material powders of LiF, $TiF_4$, and $AlF_3$ were weighed in a molar ratio of $LiF:TiF_4:AlF_3$ = 2.7:0.3:0.7. These were pulverized and mixed in a mortar to obtain a mixture. The obtained mixed powder was subjected to a milling process at 500 rpm for 12 hours using a planetary ball mill (Model P-7, manufactured by FRITSCH). Thus, a powder of a halide solid electrolyte material according to Example 1 was obtained. A solid electrolyte material according to Example 1 had a composition represented by $Li_{2.7}Ti_{0.3}Al_{0.7}F_6$ (hereinafter referred to as "LTAF").

[Preparation of Coated Active Material]

As a positive electrode active material, powder of $Li(NiCoAl)O_2$ (hereinafter referred to as "NCA") was prepared.

A coating layer made of the LTAF was formed on the surface of the NCA. Accordingly, a coated active material including the coating layer made of the LTAF on the surface of the NCA (hereinafter referred to as "LTAF-coated NCA") was obtained. The coating layer was formed using a high-speed mixing and granulating machine (BG-2L, manufactured by FREUND-TURBO CORPORATION). Specifically, the NCA and the LTAF were weighed in a weight ratio of 95.94:4.06, charged into the high-speed mixing and granulating machine, and processed under the conditions of chopper rotation speed: 3000 rpm and processing time: 60 minutes.

[Preparation of Second Solid Electrolyte]

In an argon glove box with a dew point of -60°C or lower, raw material powders of $Li_2S$ and $P_2S_5$ were weighed in a molar ratio of $Li_2S:P_2S_5$ = 75:25. These were pulverized and mixed in a mortar to obtain a mixture. Then, the mixture was subjected to a milling process under the conditions of 10 hours and 510 rpm using a planetary ball mill (Model P-7, manufactured by FRITSCH). Accordingly, a glassy solid electrolyte was obtained. The glassy solid electrolyte was subjected to heat treatment in an inert atmosphere under the conditions of 270°C and 2 hours. Accordingly, $Li_2S-P_2S_5$ (hereinafter referred to as "LPS") which is a glass ceramic solid electrolyte was obtained.

[Preparation of Positive Electrode Material]

In an argon glove box, the LTAF-coated NCA and the LPS were weighed such that the volume ratio of the LTAF-coated NCA to the LPS was 60:40. Furthermore, a fibrous conductive additive (VGCF-H, manufactured by Resonac Packaging Corporation) was weighed so as to be 1.5 mass% relative to the mass of the NCA. These were mixed in an agate mortar to prepare a positive electrode material of Example 1.

<Example 2>

In preparing a coated active material, the NCA and the LTAF were weighed in a weight ratio of 96.52:3.48. Except for this, a positive electrode material of Example 2 was prepared in the same manner as in Example 1.

<Example 3>

In preparing a coated active material, the NCA and the LTAF were weighed in a weight ratio of 97.31:2.69. Except for this, a positive electrode material of Example 3 was prepared in the same manner as in Example 1.

<Example 4>

In preparing a coated active material, the NCA and the LTAF were weighed in a weight ratio of 97.31:2.69, charged into the high-speed mixing and granulating machine, and processed under the conditions of chopper rotation speed: 3000 rpm and processing time: 80 minutes. Except for this, a positive electrode material of Example 4 was prepared in the same manner as in Example 1.

<Example 5>

In preparing a coated active material, the NCA and the LTAF were weighed in a weight ratio of 97.31:2.69, charged into the high-speed mixing and granulating machine, and processed under the conditions of chopper rotation speed: 3000 rpm and processing time: 20 minutes. Except for this, a positive electrode material of Example 5 was prepared in the same manner as in Example 1.

<Example 6>

In preparing a coated active material, the NCA and the LTAF were weighed in a weight ratio of 98.26:1.74. Except for this, a positive electrode material of Example 6 was prepared in the same manner as in Example 1.

<Comparative Example 1>

In preparing a coated active material, the NCA and the LTAF were weighed in a weight ratio of 98.84:1.16. Except for this, a positive electrode material of Comparative Example 1 was prepared in the same manner as in Example 1.

[Measurement of Thickness of Coating Layer in Coated Active Material]

For each of four particles of the coated active material of each of the Examples and the Comparative Examples, a cross-sectional image of the coated active material was taken using a field emission scanning electron microscope (SU8230, manufactured by Hitachi High-Tech Corporation). The thickness of the coating layer of each coated active material was measured. The method for measuring the thickness was as described above.

Next, for each of the four particles of the coated active material, 360 thickness values were obtained by the above-described method, and the median value, the average value, and the first quartile in a thickness distribution thereof were calculated.

Tc was calculated by averaging the median values respectively obtained for the four particles of the coated active material.

Ta was calculated by averaging the average values respectively obtained for the four particles of the coated active material.

Tq was calculated by averaging the first quartiles respectively obtained for the four particles of the coated active material. The results are shown in Table 1.

From the thickness distribution obtained for each of the four particles of the coated active material, the average value Xa and the standard deviation $\sigma a$ were calculated. The coefficient of variation CVa was calculated from the average value Xa and the standard deviation $\sigma a$ by CVa = $\sigma a$/Xa. A value obtained by averaging the coefficients of variation CVa respectively obtained for the four particles of the coated active material was calculated as a percentage, thereby calculating the coefficient of variation CV of the thickness of the coating layer. The results are shown in Table 1.

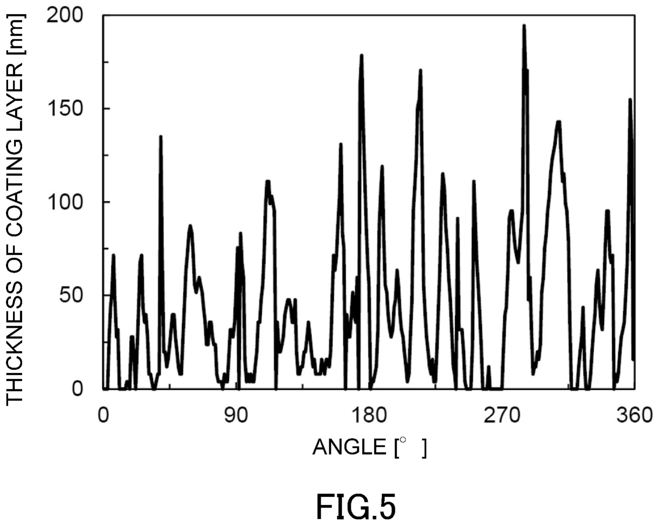

FIG. 5 is a graph showing the measurement results of the thickness obtained for one particle of the coated active material according to Example 1. FIG. 5 shows the thickness distribution obtained for one particle of the coated active material according to Example 1. In FIG. 5, the horizontal axis indicates an angle [°] in the circumferential direction of the particle of the coated active material on a circumference centered on the center of gravity of the positive electrode active material. In FIG. 5, the vertical axis indicates the thickness [nm] of the coating layer at each angle.

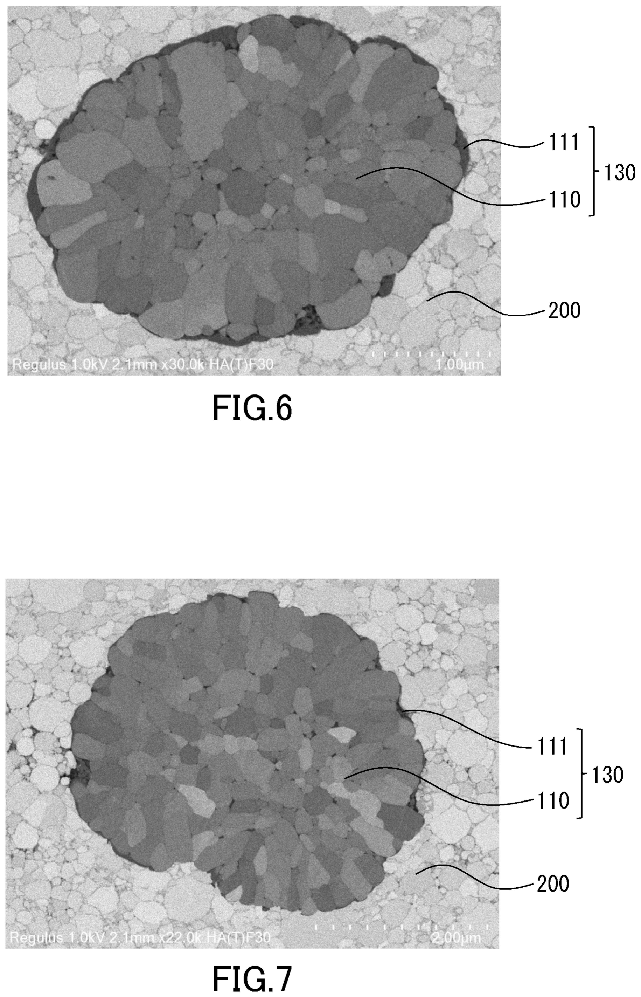

FIG. 6 is an electron microscope image of a cross-section of the coated active material according to Example 1. As shown in FIG. 6, the coated active material 130 according to Example 1 had a positive electrode active material 110 and a coating layer 111. The coated active material 130 according to Example 1 was placed on a support 200 for cross-section observation. As shown in FIG. 6, in Example 1, the coating layer 111 coated at least a part of the surface of the positive electrode active material 110. **In** Example 1, the coating layer 111 had an appropriate thickness. **In** addition, in Example 1, a coating layer 111 having a smaller coefficient of variation than in Comparative Example 1 described later was formed.

FIG. 7 is an electron microscope image of a cross-section of the coated active material according to Comparative Example 1. As shown in FIG. 7, in Comparative Example 1, there were many portions where the thickness of the coating layer 111 was small. In addition, in Comparative Example 1, a coating layer 111 having a larger coefficient of variation than in Example 1 was formed.

[Production of Battery]

A battery was produced by performing the following steps using each of the coated active materials of the Examples and the Comparative Examples.

In an argon glove box with a dew point of -60°C or lower, the positive electrode material was weighed so as to contain 5 mg of the NCA. The LPS and the positive electrode material were stacked in this order inside an insulating outer cylinder. The obtained stack was pressure-formed at a pressure of 720 MPa. Next, metal lithium was placed so as to be in contact with the LPS layer, and the stack was again pressure-formed at a pressure of 40 MPa. Accordingly, a stack composed of a positive electrode, a solid electrolyte layer, and a negative electrode was produced. Next, current collectors made of stainless steel were placed on the upper and lower portions of the stack. A current collecting lead was attached to each current collector. Next, the outer cylinder was sealed using an insulating ferrule to isolate the inside of the outer cylinder from the external atmosphere. Through the above steps, batteries of Examples 1 to 5 and Comparative Example 1 were produced. A surface pressure of 150 MPa was applied to each battery by restraining the battery from above and below with four bolts.

[Evaluation of Battery Characteristics]

The battery was placed in a thermostatic chamber at 25°C. The battery was charged at a constant current of 50 μA until a voltage of 4.25 V was reached. Subsequently, the battery was discharged at a constant current of 50 μA until a voltage of 3.68 V was reached. Then, constant current discharge was performed at a current of 46.4 mA for 2 seconds. At this time, the resistance value of the battery was calculated by dividing the difference between the open circuit voltage before discharge and the voltage at the end of discharge by the amount of discharge current. The results are shown in Table 1.

[Table 1]

|  | Tc [nm] | Ta [nm] | Tq [nm] | Coefficient of variation CV [%] | Resistance of battery [Ω] |
|---|---|---|---|---|---|
| Example 1 | 27.3 | 38.8 | 9.1 | 97 | 12.3 |
| Example 2 | 22.7 | 33.0 | 4.1 | 104 | 12.3 |
| Example 3 | 14.9 | 25.9 | 2.5 | 119 | 9.6 |
| Example 4 | 11.8 | 21.1 | 2.9 | 128 | 10.9 |
| Example 5 | 11.7 | 23.7 | 0.0 | 131 | 14.0 |
| Example 6 | 1.0 | 9.0 | 0.0 | 199 | 15.3 |
| Comparative Example 1 | 0.0 | 6.8 | 0.0 | 237 | 16.2 |

<Discussion>

As shown in Table 1, the batteries using the positive electrode materials of Examples 1 to 6, which satisfied at least one selected from the group consisting of the above-described requirements (i), (ii), and (iii), had lower battery resistance than the battery using the positive electrode material of Comparative Example 1. In Examples 1 to 6, the thickness of the coating layer was in a range where the thickness was neither excessively small nor excessively large. Therefore, it is inferred that oxidative decomposition of the second solid electrolyte was suppressed. As a result, in Examples 1 to 6, the resistance of the battery was lower than that in Comparative Example 1. In addition, the coating layer including the LTAF has an ionic conductivity of 1/1000 or less compared to that of the LPS. In Examples 1 to 6, in the coating layer, since Tc, Ta, and Tq were appropriately adjusted, it is inferred that the influence of the coating layer including the LTAF on the resistance of the battery was reduced. As a result, in Examples 1 to 6, the resistance of the battery was lower than that in Comparative Example 1.

As is clear from a comparison of Examples 1 to 5 with Example 6, when Tc was 11.7 nm or more, the resistance of the battery was further reduced. This is inferred to be because oxidation of the second solid electrolyte was further suppressed due to the thickness of the coating layer being sufficiently large.

As is clear from a comparison of Examples 3 to 5 with Example 6, when Ta was 21.1 nm or more, the resistance of the battery was further reduced. This is inferred to be because oxidative decomposition of the second solid electrolyte was further suppressed due to the thickness of the coating layer being sufficiently large.

As is clear from a comparison of Examples 3 and 4 with Examples 1, 2, 5, and 6, when Tc was 11.8 nm or more and 14.9 nm or less, the resistance of the battery was further reduced. This is inferred to be because, due to the thickness of the coating layer being in a more optimal range, oxidative decomposition of the second solid electrolyte was effectively suppressed, and the influence of the coating layer on the resistance of the battery was also sufficiently small.

It is inferred that the influence of Tc, Ta, and Tq on the resistance of the battery does not depend on the type of the positive electrode active material. Therefore, it is expected that the same tendency as in these examples will be observed even when a material other than the NCA, such as Li(NiCoMn)O$_2$ and LiCoO$_2$, is used as the positive electrode active material.

The above effects are obtained by appropriately adjusting Tc, Ta, and Tq, in combination with the excellent oxidation resistance of the first solid electrolyte containing Li, M, and F. Therefore, it is inferred that the same effects are obtained even when a first solid electrolyte having a composition other than the LTAF is used, as long as the first solid electrolyte contains Li, M, and F.

INDUSTRIAL APPLICABILITY

The technique of the present disclosure is useful, for example, for all-solid-state lithium ion secondary batteries.

**Claims**

1.　An electrode material comprising a particle group of a coated active material, wherein

　　particles of the coated active material each comprise an active material and a coating layer coating at least a part of a surface of the active material, and

at least one selected from the group consisting of the following requirements (i), (ii), and (iii) is satisfied,

(i) a thickness Tc of the coating layer calculated by averaging median values in thickness distributions of the coating layers of a plurality of the particles is 1.0 nm or more and 100.0 nm or less,

(ii) a thickness Ta of the coating layer calculated by averaging average values in thickness distributions of the coating layers of a plurality of the particles is 9.0 nm or more and 100.0 nm or less, and

(iii) a thickness Tq of the coating layer calculated by averaging first quartiles in thickness distributions of the coating layers of a plurality of the particles is 2.5 nm or more and 50.0 nm or less.

2. The electrode material according to claim 1, wherein the Tc is 30.0 nm or less.

3. The electrode material according to claim 1, wherein the Tc is 10.0 nm or more.

4. The electrode material according to claim 1, wherein the Tc is 11.8 nm or more and 20.0 nm or less.

5. The electrode material according to claim 1, wherein the Ta is 40.0 nm or less.

6. The electrode material according to claim 1, wherein the Ta is 20.0 nm or more.

7. The electrode material according to claim 1, wherein the Tq is 10.0 nm or less.

8. The electrode material according to claim 1, wherein a coefficient of variation of a thickness of the coating layer is 70% or more and less than 237%.

9. The electrode material according to claim 1, wherein the coating layer comprises a first solid electrolyte.

10. The electrode material according to claim 9, wherein

the first solid electrolyte comprises Li, M, and F, and
the M is at least one element selected from the group consisting of metalloid elements and metal elements other than Li.

11. The electrode material according to claim 9, wherein

the first solid electrolyte comprises Li, M1, M2, and F,
the M1 is at least one selected from the group consisting of Ti and Zr, and
the M2 is at least one selected from the group consisting of Al, Y, Mg, and Ca.

12. The electrode material according to claim 11, wherein the M2 is Al.

13. The electrode material according to claim 11, wherein the M1 is Ti.

14. The electrode material according to claim 9, wherein

the first solid electrolyte is represented by the following composition formula (1),

$$\text{Li}_{6-(4-x-4y+my)b}(\text{Ti}_{1-x-y}\text{Al}_x\text{M3}_y)_b\text{F}_{6-2z}\text{O}_z \ldots \qquad (1),$$

where M3 is at least one selected from the group consisting of Zr, Ni, Fe, and Cr, m is a valence of the M3, and

$$0.1 < x < 0.9,$$

$$0 \le y < 0.1,$$

$$0 \le z < 0.1,$$

and

$$0.8 < b \le 1.2$$

are satisfied.

15. The electrode material according to claim 14, wherein

$$0.1 < x < 0.9,$$

$$y = 0,$$

$$z = 0,$$

and

$$0.8 < b \le 1.2$$

are satisfied.

16. The electrode material according to claim 9, further comprising a second solid electrolyte which is a material different from the first solid electrolyte.

17. The electrode material according to claim 16, wherein
the second solid electrolyte comprises Li and S.

18. The electrode material according to claim 1, wherein

the active material is a positive electrode active material, and
the electrode material is a positive electrode material.

19. A battery comprising an electrode comprising the electrode material according to claim 1.

20. A battery comprising:

a first electrode comprising the electrode material according to claim 1;
a second electrode; and
an electrolyte layer placed between the first electrode and the second electrode.

FIG.1

FIG.2

FIG.3

FIG.4

FIG.5

FIG.6

FIG.7

## INTERNATIONAL SEARCH REPORT

| International application No. |
|---|
| **PCT/JP2024/017533** |

### A. CLASSIFICATION OF SUBJECT MATTER

*H01M 4/525*(2010.01)i; *H01B 1/06*(2006.01)i; *H01M 4/36*(2006.01)i; *H01M 4/62*(2006.01)i
FI:   H01M4/525; H01B1/06 A; H01M4/36 C; H01M4/62 Z

According to International Patent Classification (IPC) or to both national classification and IPC

### B. FIELDS SEARCHED

Minimum documentation searched (classification system followed by classification symbols)

H01M4/525; H01B1/06; H01M4/36; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/161752 A1 (PANASONIC INTELLECTUAL PROPERTY MANAGEMENT CO., LTD.) 19 August 2021 (2021-08-19) claims, paragraphs [0059]-[0087], examples | 1-10, 16-20 |
| A | | 11-15 |
| X | JP 2014-11028 A (TOYOTA JIDOSHA KABUSHIKI KAISHA) 20 January 2014 (2014-01-20) claims, paragraphs [0028]-[0032], examples | 1-9, 16-20 |
| A | | 10-15 |

☐ Further documents are listed in the continuation of Box C.      ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 July 2024** | **30 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

24

## INTERNATIONAL SEARCH REPORT
### Information on patent family members

International application No.

**PCT/JP2024/017533**

| Patent document<br>cited in search report | | | Publication date<br>(day/month/year) | Patent family member(s) | | | Publication date<br>(day/month/year) |
|---|---|---|---|---|---|---|---|
| WO | 2021/161752 | A1 | 19 August 2021 | US | 2022/0384813 | A1 | |
| | | | | claims, paragraphs [0074]-[0107], examples | | | |
| | | | | EP | 4105179 | A1 | |
| | | | | claims, paragraphs [0059]-[0092], examples | | | |
| | | | | CN | 115066769 | A | |
| JP | 2014-11028 | A | 20 January 2014 | US | 2015/0311507 | A1 | |
| | | | | claims, paragraphs [0040]-[0045], examples | | | |
| | | | | CN | 104364942 | A | |
| | | | | KR | 10-2015-0018562 | A | |
| | | | | KR | 10-2016-0150118 | A | |

Form PCT/ISA/210 (patent family annex) (July 2022)

**REFERENCES CITED IN THE DESCRIPTION**

**Patent documents cited in the description**

• WO 2021187391 A